# FASCICULE DE BREVET EUROPEEN

(11) **EP 2 119 191 B1**
(45) Date de publication et mention de la délivrance du brevet: **02.04.2014**
(21) Numéro de dépôt: 08762025.8
(22) Date de dépôt: 01.02.2008
(51) Int. Cl.: H04L 29/06

(54) **DISPOSITIF CLIENT LÉGER ET PROCÉDÉ D'UTILISATION**
DÜNNE CLIENTVORRICHTUNG UND VERWENDUNGSVERFAHREN
THIN CLIENT DEVICE AND METHOD OF USE

(30) Priorité: 01.02.2007 FR 0752994
(43) Date de publication de la demande: 18.11.2009
(73) Titulaire: SAGEMCOM BROADBAND SAS, 92500 Rueil Malmaison (FR)
(72) Inventeur: MORARD, Jean Pierre, F-92200 Neuilly sur Seine (FR)
(74) Mandataire: Schmit, Christian Norbert Marie
(86) Numéro de dépôt international: PCT/FR2008/050165
(87) Numéro de publication internationale: WO 2008/099127

(56) Documents cités:
- EP-A- 1 471 418
- WO-A-2006/074110

## Description

L'invention a pour objet un dispositif client léger et un procédé d'utilisation du dispositif client léger.

Le domaine de l'invention est celui des clients légers. Un client léger est un dispositif, et/ou une application, qui ne fait que peut ou pas de traitement. Dans la pratique les traitements sont limités à la prise en compte d'une interface homme machine et donc à la décompression de flux d'instructions formatant un affichage. Cette prise en compte inclut l'aptitude à décompresser des flux audio et/ou vidéo. Plus particulièrement le domaine de l'invention est celui des receveurs décodeurs de télévision avancés aussi connus sous le nom de Set Top Box (STB).

Un but de l'invention est d'augmenter les fonctionnalités de dispositifs de type STB.

Un autre but de l'invention est de pérenniser l'augmentation des fonctionnalités.

Dans l'état de la technique on connaît les STB, mais ces appareils sont dépourvus de périphérique. In est prévu dans une évolution de ces appareils de les doter d'une capacité d'interface à distance, c'est-à-dire de l'aptitude à se comporter comme un client léger relativement à un serveur d'interface. Cette aptitude est au moins la capacité de recevoir et interpréter des instructions d'affichage et à émettre des messages de commande produits suite à une détection d'un événement du type sollicitation d'un périphérique d'entrée connecté à la STB. Ce type de comportement et de réalisation est connu sous le nom de serveur de terminal.

Cependant ce mode de fonctionnement est en fait inadapté à la gestion de périphériques connecté à la STB. En effet un périphérique a besoin de pilote pour permettre à l'appareil sur lequel il est connecté de commander correctement le périphérique. De plus de tels pilotes impliquent souvent des traitements qui sont effectués par l'appareil sur lequel les pilotes sont installés. Ces traitements sont le plus souvent incompatibles avec la puissance de l'appareil sur lequel le périphérique est connecté.

Un autre problème est que chaque périphérique requiert un pilote qui lui est propre et qu'il faut installer sur l'appareil pilotant le périphérique. Dans la mesure où un dispositif de type STB est fiabilisé par l'impossibilité relative de mettre à jour son code applicatif, cela signifie que le fabriquant de STB doit prévoir et maintenir des pilotes pour tous les périphériques qu'un utilisateur est susceptible de connecter à la STB. Cela est virtuellement impossible.

WO 01/54292 décrit un "set-top-box" connectant un dispositif de commande distant à un site Web pour des téléchargements de code personnalisés.

Les STB selon l'état de la technique actuelle, et à venir dans un avenir prévu, sont donc incompatibles avec le pilotage complet et optimal d'un périphérique connecté sur un port local à une STB.

Dans l'invention on résout ces problèmes en déportant un port local d'un dispositif client léger via un réseau auquel est connecté le dispositif client léger. Ce port est alors vu comme un port local par un dispositif serveur, accessible via le réseau auquel le dispositif client léger est connecté, sur lequel il devient possible d'installer un pilote pour commander le périphérique connecté sur le port local déporté. L'utilisateur du dispositif client léger peut alors piloter, via une interface utilisateur déportée, le périphérique connecté physiquement au client léger mais logiquement au serveur.

L'invention a donc pour objet un dispositif client léger comportant une première interface de connexion à un réseau, caractérisé en ce que:
- le client léger comporte une application cliente virtuelle apte à se connecter, via la première interface, à une application serveur de virtualisation d'applications mise en oeuvre par un dispositif serveur comportant une deuxième interface de connexion au réseau, la connexion entre les applications cliente et serveur étant alors réalisée à travers la première interface, le réseau et la deuxième interface en utilisant un protocole d'interface distante commun aux deux applications de virtualisation,
- le client léger comporte au moins un premier port local de connexion d'un périphérique,
- le client léger comporte une première passerelle pour interfacer le premier port de connexion avec la première interface, le serveur comportant une deuxième passerelle pour interfacer un pilote d'un périphérique connecté au premier port avec la deuxième interface et permettre à l'application serveur d'utiliser le premier port comme un port local du serveur.

Dans une variante le dispositif selon l'invention est aussi caractérisé en ce qu'il comporte un périphérique de commande produisant des messages de commandes reçus par le dispositif client léger et transmis par lui via le réseau au dispositif serveur.

Dans une variante le dispositif selon l'invention est aussi caractérisé en ce que le client léger est un boîtier décodeur de télévision.

Dans une variante le dispositif selon l'invention est aussi caractérisé en ce que le premier port est d'un type compris dans la liste formée d'au moins:
- USB,
- IEEE 1394,
- DB9,
- Wifi,
- BlueTooth.

L'invention a aussi pour objet un procédé d'utilisation du dispositif selon l'une des variantes précédentes caractérisé en ce qu'il comporte les étapes suivantes:
- connexion de l'application cliente à l'application serveur,
- émission par l'application serveur de données contenant le descriptif d'une interface homme machine,
- affichage par l'application cliente de l'interface homme machine par interprétation de ces données,
- production, par un utilisateur et par une validation d'un élément de l'interface homme machine, d'une commande de mise en oeuvre d'un périphérique connecté au port de connexion d'un périphérique,
- détection, par le client léger, de la commande produite par l'utilisateur,
- production, par le client léger, d'un message de commande décrivant la commande produite,
- émission du message de commande vers le dispositif serveur,
- interprétation du message de commande et mise en oeuvre du périphérique connecté au port de connexion selon l'interprétation du message de commande.

L'invention sera mieux comprise à la lecture de la description qui suit et à l'examen des figures qui l'accompagnent. Celles-ci sont présentées à titre indicatif et nullement limitatif de l'invention. Les figures montrent:
Figure 1: une illustration d'une mise en oeuvre d'un dispositif de l'invention selon un premier mode de réalisation.
Figure 1b: une illustration d'une mise en oeuvre d'un dispositif selon l'invention selon un deuxième mode de réalisation.
Figure 2: Une illustration d'étapes du procédé selon l'invention.

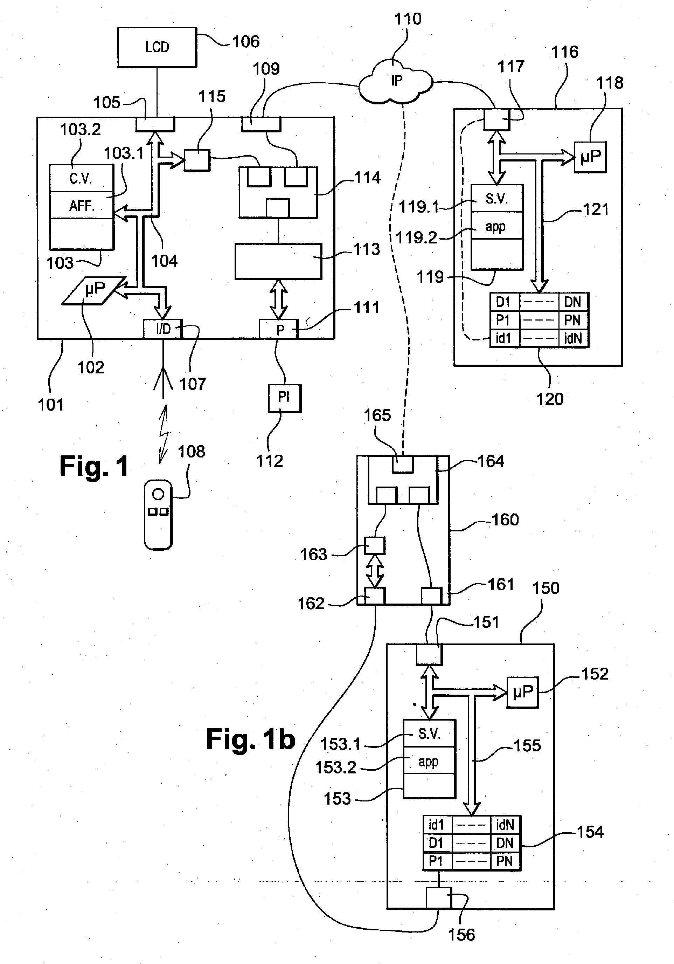

La figure 1 montre un dispositif 101 client léger. Dans l'exemple illustrant l'invention le dispositif 101 est un boîtier récepteur / décodeur de télévision aussi connu sous le nom de STB. On parle donc à partir de maintenant du STB 101, étant entendu que cette appellation n'est pas limitative de l'invention.

La figure 1 montre que le STB 101 comporte un microprocesseur 102 et une mémoire 103 de programmes, les éléments 102 et 103 étant connectés via un bus 104.

Lorsque l'on prête une action à un dispositif cette action est en fait réalisée par un microprocesseur dudit dispositif, ledit microprocesseur étant commandé par des codes instructions enregistrés dans une mémoire de programme dudit dispositif. Il en va de même lorsque l'on prête une action à une application. Une application est en fait un ensemble de codes instructions enregistrés dans une mémoire d'un dispositif. L'action prêtée à l'application est donc réalisée par un microprocesseur du dispositif dans une mémoire duquel les codes instructions de l'application sont enregistrés.

Le STB 101 comporte des circuits 105 permettant de connecter le STB 101 à un écran 106. L'écran 106 permet au moins de visualiser des programmes et/ou flux vidéo décodés par le STB 101. Les circuits 105 sont aussi connectés au bus 104.

Le STB 101 comporte des circuits 107 interface entre le bus 104 et un périphérique 108 de commande du STB 101. Le périphérique 108 est, par exemple une télécommande. Les circuits 107 sont, par exemple, des circuits infra rouges. Dans une autre mise en oeuvre les circuits 107 sont des circuits radio de type Wifi, BlueTooth ou d'une autre norme. Dans encore une autre mise en oeuvre les circuits 107 sont des circuits selon une norme correspondant à une connexion câblée comme USB, DB9, DIN ou PS/2 pour ne citer que les normes les plus courantes. Le périphérique 107 peut lui aussi être autre, comme un dispositif de pointage et/ou un clavier de type PC (ordinateur personnel). On note ici qu'une télécommande comporte la plupart du temps un dispositif de pointage.

Les éléments décrits jusqu'à présent pour la STB 101 sont des éléments classiques d'une STB.

La mémoire 103 comporte au moins deux zones.

Une zone 103.1 comporte des codes instructions pour piloter les circuits 105 en fonction d'instruction d'affichage. La zone 103.1 est donc un pilote vidéo permettant à la STB 101 d'afficher des images sur l'écran 106 via le connecteur 105.

Une zone 103.2 comporte des codes instructions correspondant à une application cliente virtuelle. Une telle application remplit au moins trois tâches.
- Connexion à une application serveur de virtualisation par la mise en oeuvre d'un protocole spécifique, ces protocoles étant connu sous le nom de protocole d'interface distante (RUI pour Remote Usér Interface) on parle alors d'une connexion RUI.
- émission à travers une connexion RUI de messages de commande décrivant les actions effectuées par l'utilisatéur du dispositif client léger via un périphérique d'entrée du dispositif client léger. Dans le cas présent il s'agit des actions réalisées par l'utilisateur du STB 101 sur la télécommande 108.
- réception d'un flux vidéo à travers la connexion RUI et affichage de ce flux vidéo sur un écran, ici l'écran 106.

Les protocoles RUI les plus connus sont:
- RDP (Remote Desktop Protocol, pour protocole de bureau à distance),
- ICA (Independent Computing Architecture, pour architecture d'ordinateur indépendant)
- XRT (Extended Remote Technology, pour technologie distante étendue),
- VDI (Virtual Device Interface pour interface virtuelle d'appareil).

L'invention n'est cependant pas limitée par l'utilisation d'un de ces protocoles.

La figure 1 montre que la STB 101 selon l'invention comporte aussi une interface 109 permettant de connecter la STB 101 à un réseau 110. Dans notre exemple le réseau 110 est un réseau IP. Dans notre exemple toujours l'interface 109 est un connecteur RJ45 selon la norme Ethernet. Dans une autre mise en oeuvre le STB 101 est connecté au réseau 110 par une solution de connexion non câblée comme par exemple une connexion Wifi. Dans encore une autre mise en oeuvre le réseau 110 est réalisé par des technologies sur courant porteur.

Le STB 101 comporte aussi un port 111 local permettant de connecter à la STB 101 un périphérique 112 local. On considère pour l'exemple que le port 111 est un port USB. Le port 111 pourrait être d'une nature différente parmi au moins celles citées pour les circuits 107.

Le périphérique 112 est, par exemple, une imprimante. Cependant on note que le périphérique 101 peut être n'importe quel périphérique compatible avec le port 111. On cite pour l'exemple dans le cas d'un port USB un lecteur/graveur de CD/DVD, un périphérique de stockage de masse. On rappel ici qu'un appareil photo numérique est vu comme un périphérique de stockage de masse à travers une connexion USB.

La figure 1 montre que le port 111 est connecté à une passerelle 113 de déport du port 111. Dans une première mise en oeuvre de l'invention la passerelle 113 transforme le port 111 en un port Ethernet. Cela permet au port 111, et surtout au périphérique qui lui est connecté, d'être vu comme un périphérique réseau sur le réseau 110. Pour parvenir à ce résultat le STB 101 comporte aussi un concentrateur 114 (aussi connu sous le nom de 'switch') à la passerelle 113, au connecteur 109 et à des circuits 115 Ethernet interface entre le bus 104 et le concentrateur 114. Le concentrateur 114 permet de dédoubler le port 109 et donc d'associer deux adresses réseau au STB 110. L'une de ces adresses correspond au port 111, l'autre correspond aux autres éléments du STB. Nous appelons ici l'adresse correspondant au port 111 addPer, et l'adresse correspondant aux autres éléments addSTB.

Dans une autre mise en oeuvre de l'invention, désignée ici comme deuxième mise en oeuvre, le dispositif 114 est un mini-routeur. C'est-à-dire un dispositif qui permet d'associer un port logique de l'adresse réseau du STB 101 à la passerelle 113. On rappel ici que les communications réseau se font à travers des "interfaces de connexion" (ou 'socket'). Une interface de connexion comporte une adresse réseau et un numéro de port. Dans cette deuxième mise en oeuvre un numéro de port NP113 est attribué, par le dispositif 114, à la passerelle 113. Le dispositif 114 fait alors du "transfert de port" (ou 'port forwarding') assurant ainsi que les trames réseau reçu via l'interface 109 sur le port NP113 sont transférées vers la passerelle 113.

La figure 1 montre un serveur 116 connecté au réseau 110 via une interface 117. Lé serveur 116 correspond à la première mise en oeuvre de l'invention. Le serveur 116 comporte aussi un microprocesseur 118, une mémoire 119 de programme et une mémoire 120 de configuration de périphériques. Les éléments 117 à 120 sont interconnectés par un bus 121.

La mémoire 119 comporte au moins une zone 119.1 comportant des codes instructions correspondant à un serveur de virtualisation. Un serveur de virtualisation remplît au moins trois tâches.
- Connexion à une application cliente virtuelle par la mise en oeuvre d'un protocole RUI.
- Réceptions, via la connexion RUI, de messages de commandes et interprétations de ces commandes ce qui provoque la mise en oeuvre d'une application locale au serveur.
- Production et émissions via la connexion RUI d'un flux vidéo correspondant à la mise en oeuvre de l'application locale au serveur.

La mémoire 119 comporte au moins une zone 119.2 comportant des codes instructions correspondant à une application locale.

On note ici que l'application locale 119.2 est virtualisée par le serveur 116 et devient une application distante pour l'application cliente virtuelle 103.2. En d'autres termes, grâce au protocole RUI, un utilisateur du STB 101 est apte à exécuter l'application 119.2 sur le serveur 116. L'application, cliente virtuelle transmet les actions de l'utilisateur sur la télécommande 108 à l'application serveur de virtualisation et reçoit en retour un flux vidéo correspondant à l'interprétation de ces actions par le serveur 116.

La mémoire 120 décrit les périphériques connectés au serveur 116. La mémoire 120 permet d'associer un identifiant de périphérique à un pilote et à un port Chaque colonne de la mémoire 120 correspond à un périphérique utilisable par le serveur 116. Les ports sont de plusieurs type parmi au moins:
- port local,
- port réseaux.

Dans un exemple considérons que le périphérique 112 est un lecteur/graveur de DVD. Dans ce cas La mémoire 120 comporte une colonne associant le pilote du modèle de lecteur/graveur de DVD à un port réseau dont l'adresse est addPer.

Dans un autre exemple considérons que le périphérique 112 est une clé USB. Dans ce cas La mémoire 120 comporte une colonne associant le pilote périphérique de stockage de masse à un port réseau dont l'adresse est addPer.

Dans un autre exemple considérons que le périphérique 112 est une imprimante. Dans ce cas La mémoire 120 comporte une colonne associant le pilote de l'imprimante 112 à un port réseau dont l'adresse est addPer.

Les identifiants sont, par exemple, le nom du périphérique.

Les adresses addSTB et addPer sont enregistrées dans une mémoire de configuration du STB 101. Ces adresses sont soit fixées par une configuration manuelle via un menu de configuration du STB 101, soit fixé par un protocole de découverte du réseau de type DHCP (Dynamic Host Configuration Protocol, pour protocole de configuration dynamique d'un hôte). Ces adresses sont uniques sur le réseau 110.

Avec cette variante de l'invention, un utilisateur du STB 101, assis devant l'écran 106 et utilisant la télécommande 108, lance l'application 119.2 sur le serveur 116 et visualise l'interface graphique de cette application sur l'écran 106. Grâce à l'invention, l'application 119.2 est apte à utiliser le périphérique 112. Dans cette variante la passerelle du serveur est donc le port réseau utilisé.

La figure 1b montre un serveur 150 correspondant à la deuxième mise en oeuvre de l'invention. Le serveur 150 comporte des éléments 151 à respectivement 155 identiques aux éléments 117 à respectivement 121.

La figure 1b montre aussi un dispositif 160 passerelle. Le dispositif 160 comporte une interface 161 compatible avec l'interface 151. Le dispositif 160 comporte aussi une interface 162 compatible avec une interface 156 du serveur 150. Dans un exemple l'interface 156 est un port USB 156.

Le dispositif 160 comporte aussi des circuits 163 identiques aux circuits 113.

Le dispositif 160 comporte encore des circuits 164 identiques aux circuits 114.

L'interface 162 est connectée aux circuits 163 qui sont eux connecté aux circuits 164. L'interface 161 est connectée aux circuits 164. Sont connectés au réseau 110 via une interface 165. L'interface 165 a la même adresse réseau que le serveur 150. Les circuits 164 font un transfert de port permettant de répartir le trafic réseau destiné au serveur 150 entre l'interface 151 du serveur 150 et l'interface 156 du serveur 150. Les circuits 164 attribuent un port NP163 de l'interface de connexion du serveur 150 au circuit 163. Les circuits 163 eux assurent la conversion des signaux entre l'interface 162 et le réseau 110.

Dans la deuxième mise en oeuvre de l'invention les communications entre le serveur 150 et le périphérique 112 se font donc à travers l'interface 156 et non à travers l'interface 151.

Dans la deuxième variante de l'invention le STB 101 et le dispositif 160 comportent chacun une mémoire de configuration pour paramétrer les ports NP113 et NP163.

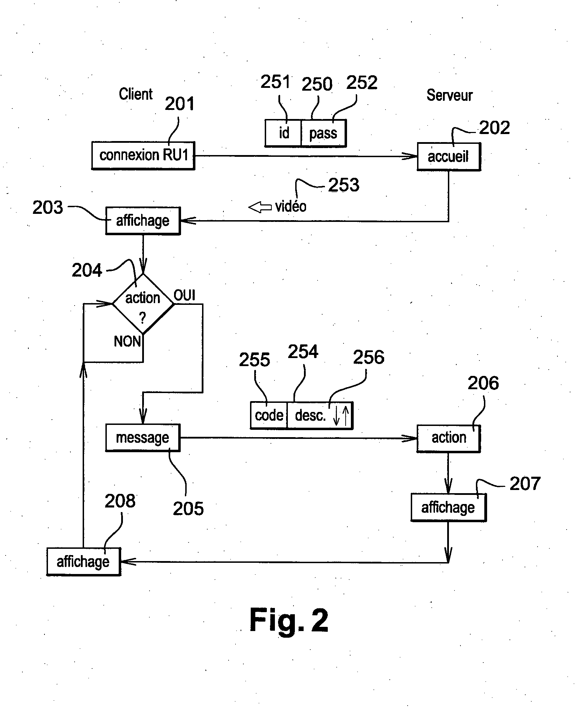

La figure 2 montre une étape 201 de connexion du dispositif 101 client léger au serveur 116. Dans l'étape 201 un utilisateur du STB 101 utilise la télécommande 108 pour parcourir des menus de commande du STB 101, lesdits menus étant visualisés sur l'écran 106. Dans ces menus de commande, l'utilisateur sélectionne l'option connexion correspondant à l'établissement d'une connexion avec un serveur d'interfaces distantes via un protocole RUI.

Dans la pratique l'adresse du serveur d'interfaces distantes est configurée dans une mémoire du STB 101. Il s'agit alors d'une adresse sur le réseau 110 qui est un réseau local. Dans une variante de l'invention la sélection de l'option connexion provoque l'exécution par lé STB 101 d'un processus d'exploration du réseau 110 pour y détecter les serveurs d'interfaces distantes. Le résultat de ce processus d'exploration est une liste de serveurs dans laquelle l'utilisateur sélectionne le serveur qui l'intéresse. Si le résultat du processus d'exploration ne comporte qu'un seul serveur alors, dans un comportement par défaut, le STB 101 se connecte directement à cet unique serveur sans solliciter l'utilisateur.

L'étape 201 de connexion comporte une étape de production d'un message 250 de connexion comportant au moins un identifiant 251 de connexion, et dans une variante un mot de passe 252 de connexion. Ce message de connexion est envoyé vers le serveur 116 et plus particulièrement vers l'application 119.1 mise en oeuvre par ce serveur 116. Les identifiant de connexion et mot de passe sont enregistrés dans une mémoire de configuration du STB 101. Dans une mise en oeuvre le serveur 116 se contente de l'adresse du STB 101 comme identifiant. Cette adresse est transmise automatiquement pour permettre une réponse au message de connexion.

Dans une étape 202 le serveur 116, et plus particulièrement l'application 119.1, reçoit le message 250. Le serveur 116 associe un profil à l'identifiant que comporte ce message. Dans sa plus simple expression ce profil est une image d'accueil correspondant à ce que l'on appel un bureau virtuel. Une telle image représente en fait un menu et est divisée en zone, chaque zone étant sélectionnable soit pour poursuivre la navigation dans le menu, soit pour lancer une application spécifique cette image est envoyée vers le STB 101. Dans une variante le profil associé à l'identifiant correspond à une application, par exemple l'application 119.2. Dans ce cas le serveur 116 exécute cette application et localement, c'est-à-dire sur le serveur 116. Cette exécution se fait dans une fenêtre d'affichage que le serveur n'affiche pas sur son écran. Cependant le contenu de cette fenêtre d'affichage est envoyé, sous forme d'un flux vidéo, vers le STB 101. Un flux vidéo est une succession d'images. On remarque ici qu'un bureau virtuel n'est qu'une application parmi d'autre.

Dans une étape 203 suivant l'étape 202, le STB 101 reçoit un flux 253 vidéo en réponse au message 250. Dans l'étape 203 le STB 101 décode le flux 253 et affiche les images résultantes sur l'écran 106.

Le STB 101 passe alors à une ,étape 204 d'attente d'une action de l'utilisateur. Une action de l'utilisateur est une sollicitation d'un périphérique d'entrée de la STB 101. Dans notre exemple le périphérique d'entrée est la télécommande 108.

Si une action est détectée par le STB 101, ledit STB passe à une étape 205 de production d'un message 254 d'action. Le message 254 comporte au moins un champ 255 comportant un identifiant de l'élément du périphérique d'entrée qui a été sollicité. Dans une variante le message 254 comporte aussi un champ 256 décrivant la façon dont l'élément identifié par le champ 255 a été sollicité. Un message 254 se traduit alors par exemple et en langage naturel de la façon suivante:
- touche '1' enfoncée, ou
- touche '1' relâchée,
- dispositif de pointage déplacé de x+3 et y-2...

Cette liste n'est pas exhaustive.

Le message 254 d'action est reçu par le serveur 116 dans une étape 206. Dans la mesure où le STB 101 affiche le flux vidéo émis par le serveur 116, le serveur 116 est apte à associer le message d'action à une image affichée sur l'écran 106. Dans l'étape 206 le serveur 116 interprète donc le message d'action en fonction de l'image affiché sur l'écran 106 au moment où le message d'action a été produit. Ce moment correspond à peu de chose près au moment où le message d'action a été reçu par le serveur 116. Dans une variante un message d'action comporte une date ce qui permet d'associer le message d'action à une image précise. Une telle date est, par exemple un tampon temporel (nombre de millisecondes écoulées depuis le 1 er janvier 1970 au moment de la production du message d'action), ou un repère dans le flux vidéo.

Cette interprétation est soit:
- (1) le déplacement d'un dispositif de pointage, soit
- (2) une activation d'une zone de l'image.

Dans le cas (1) le serveur 116 modifie le flux 253 vidéo pour prendre en compte le déplacement du dispositif de pointage. On note ici que le serveur sauvegarde la position du dispositif de pointage. Le serveur est donc apte à modifier cette position en fonction de messages de commandes reçus.

Dans le cas (2) le serveur entreprend l'action correspondant à la zone de l'image activée. Considérons qu'il s'agit d'une commande d'activation du périphérique 112. Cela est parfaitement possible puisque pour le serveur 116, le périphérique 112 est en fait un périphérique local. Dans ce cas le serveur 116 active le périphérique 112 comme n'importe quel périphérique connecté au serveur 116. Pour le serveur 116, et relativement au périphérique 112, le STB 101 est transparent.

Dans l'étape 206 le serveur 116 produit donc au moins un message de commande pour le périphérique 112, ce message de commande étant acheminé vers le périphérique 112 via le réseau 110 et ce indépendamment du protocole RUI utilisé par les STB 101 et serveur 116 pour communiquer. En effet comme on l'a déjà décrit, le périphérique 112 est un périphérique local pour le serveur 116. N'importe quelle application exécutée par le serveur 116 est donc apte à utiliser le périphérique 112. On remarque ici que les messages de commandes et flux vidéo sont véhiculés selon le protocole RUI utilisé pour l'établissement d'une connexion RUI entre le STB 101 et le serveur 116.

L'étape 206 est suivie d'une étape 207 dans laquelle le serveur 116 modifie le flux vidéo pour rendre compte à l'utilisateur du STB 101 de la prise en compte du message de commande 254.

Dans une étape 208 identique à l'étape 203 le STB 101 affiche le flux vidé modifié. L'utilisateur du STB 101 constate donc sur l'écran 106 la prise en compte de ses actions par le serveur 116. L'utilisateur du STB 101 le constate aussi par l'activation du périphérique 112.

Ainsi avec l'invention il est possible d'enregistrer des données sur un périphérique d'enregistrement connecté au port 111. Avec l'invention il est aussi possible de connecter une imprimante au port 111. Une fois l'imprimante connectée il est possible de lancer, via RUI, une application de visualisation de photographies via laquelle il est possible d'imprimer des photos sur l'imprimante connectée au port 111. Avec l'invention il est aussi possible de connecter un périphérique de stockage de masse au port 111. Ce périphérique est alors vu comme une unité de stockage locale par le serveur 116. Le serveur 116 est donc apte à lancer des applications contenues sur le périphérique de stockage de masse.

Avec l'invention il est donc possible de déporter l'utilisation de périphériques, et ce indépendamment du protocole RUI utilisé. Cela réduit, entres autres, la puissance et les mises à jours requises pour le dispositif client léger qu'est le STB 101.

## Revendications

1. Dispositif client léger (101) pour gérer, par un serveur (116, 150) à travers un réseau (110), un périphérique local (112) connecté au dispositif client léger (101), qui comporte :
• une première interface(109) connectée à une seconde interface (117) du serveur (116, 150) à travers le réseau (110) ;
• une application (103.2)cliente virtuelle connectée au serveur (116, 150) à travers un protocole interface utilisateur distant ;
• au moins un premier port (111) local pour connecter le périphérique local (112); et
• une première passerelle (113, 114)adaptée pour interfacer ledit au moins un premier port (111) local avec la première interface (109) et pour transformer ledit au moins un premier port (111) local en un port Ethernet ; et
le serveur (116, 150) comporte une seconde passerelle (120, 160)adaptée pour interfacer le périphérique local (112) avec la seconde interface (117), ledit au moins un premier port (111) local étant ainsi redirigé en un port local du serveur (116, 150) et le dispositif client léger (101) comporte un concentrateur (114) permettant de dédoubler ladite première interface (109) et d'associer deux adresses de réseau audit dispositif client léger (101), l'une de ces adresses correspondant audit premier port (111) local, et l'autre de ces adresses correspondant aux autres éléments dudit dispositif client léger (101).

2. Dispositif selon la revendication 1, **caractérisé en ce qu'**il comporte en outre un périphérique (108) de commande pour produire des messages de commande reçus par ledit dispositif client léger (101) et transmis au serveur (116, 150) à travers le réseau (110) par ledit dispositif client léger (101).

3. Dispositif selon la revendication 1 ou 2, **caractérisé en ce que** ledit premier port (111) localest un des suivants : USB (« *Universal Serial Bus* »), IEEE 1394, DB9, Wi-Fi ou Bluetooth.

4. Dispositif selon la revendication 1, **caractérisé en ce que** ledit périphérique local(112) est un des suivants : une imprimante, une clé USB, un appareil photo numérique ou un lecteur/graveur DVD.

## Patentansprüche

1. Dünne Client-Vorrichtung (101) zum Verwalten eines mittels eines Servers (116, 150) über ein Netzwerk (110) mit der dünnen Client-Vorrichtung (101) verbundenen lokalen Gerätes (112), welche Folgendes umfasst:
• eine erste Schnittstelle (109), die über das Netzwerk (110) mit einer zweiten Schnittstelle (117) des Servers (116, 150) verbunden ist;
• eine virtuelle Client-Anwendung (103.2), die über ein entferntes Benutzerschnittstellenprotokoll mit dem Server (116,150) verbunden ist;
• wenigstens ein erster lokaler Anschluss (111), um das lokale Gerät (112) zu verbinden; und
• ein erster Gateway (113, 114), der dazu eingerichtet ist, den besagten wenigsten einen ersten lokalen Anschluss (111) mit der ersten Schnittstelle (109) zu verbinden und den besagten wenigstens einen ersten lokalen Anschluss (111) in einen Ethernet-Anschluss umzuwandeln; und
bei dem der Server (116, 150) einen zweiten Gateway (120, 160) enthält, der dafür angepasst ist, das lokale Gerät (112) mit der zweiten Schnittstelle (117) zu verbinden, sodass besagter wenigstens einer erste lokale Anschluss (111) in einen lokalen Anschluss des Servers (116, 150) umgeleitet wird und die dünne Client-Vorrichtung (101) einen Hub (114) enthält, der es erlaubt, besagte erste Schnittstelle (109) zu verdoppeln und zwei Netzwerkadressen mit der dünnen Clientvorrichtung (101) zu verbinden, wobei eine dieser Adressen dem besagten ersten lokalen Anschluss (111) entspricht und die andere dieser Adressen den anderen Elementen besagter dünnen Client-Vorrichtung (101) entspricht.

2. Vorrichtung nach Anspruch 1, **dadurch gekennzeichnet, dass** sie außerdem ein Steuerungsgerät (108) enthält, um Steuerbefehle zu produzieren, die von besagter dünnen Client-Vorrichtung (101) empfangen und mittels der dünnen Client-Vorrichtung (101) über das Netzwerk (110) an den Server (116, 150) übermittelt werden.

3. Vorrichtung nach Anspruch 1 oder 2, **dadurch gekennzeichnet, dass** besagter erster lokaler Anschluss (111) einer der Folgenden ist: USB ("Universal Serial Bus"), IEEE 1394, DB9, Wi-Fi oder Bluetooth.

4. Vorrichtung nach Anspruch 1, **dadurch gekennzeichnet, dass** besagtes lokales Gerät (112) eines der Folgenden ist: ein Drucker, ein USB-Stick, eine Digitalkamera oder ein DVD-Laufwerk.

## Claims

1. A thin client device (101) to manage, by a server (116, 150) through a network (110), a local peripheral device (112), connected to the thin client device (101), which includes:
• a first interface (109), connected to a second interface (117) of the server (116, 150) through the network (110);
• a virtual client application (103.2), connected to the server (116, 150) through a remote user interface protocol;
• at least one first local port (111), to connect the local peripheral device (112); and
• a first gateway (113, 114), suitable for interfacing the said at least one first local port (111) with the first interface (109), and to transform the said at least one first local port (111) into an Ethernet port; and
the server (116, 150) includes a second gateway (12.0, 160), suitable for interfacing the local peripheral device (112) with the second interface (117), the said at least one first local port (111) thus being rerouted through a local port of the server (116, 150) and the thin client device (101) includes a hub (114), allowing to split the said first interface (109) and to connect two network addresses to the said thin client device (101), one of these addresses corresponding to the said first local port (111), and the other of these addresses corresponding to the other elements of the said thin client device (101).

2. Device according to claim 1, **characterised in that** it also includes a peripheral control device (108), to produce control messages, received by the said thin client device (101), and sent to the server (116, 150) through the network (110) by the said thin client device (101).

3. Device according to claim 1 or 2, **characterised in that** the said first local port (111) is one of the following: USB ("Universal Serial Bus"), IEEE 1394, DB9, Wi-Fi or Bluetooth.

4. Device according to claim 1, **characterised in that** the said local peripheral device (112) is one of the following: a printer, a USB stick, a digital camera or a DVD player/burner.
